# EUROPEAN PATENT SPECIFICATION

(11) **EP 2 032 938 B1**
(45) Date of publication and mention of the grant of the patent: **11.01.2012**
(21) Application number: 07730554.8
(22) Date of filing: 05.04.2007
(51) Int. Cl.: G06T 7/00, G01B 11/30, G01N 15/02

(54) **METHOD FOR MEASURING/RECOGNIZING A SHAPE**
VERFAHREN ZUR MESSUNG/ERKENNUNG EINER FORM
PROCÉDÉ POUR MESURER/RECONNAÎTRE UNE FORME

(30) Priority: 05.04.2006 FI 20060331
(43) Date of publication of application: 11.03.2009
(73) Proprietor: SAY Group Oy, 00430 Helsinki (FI)
(72) Inventor: Seppälä, Kari, 00430 Helsinki (FI)
(74) Representative: Laitinen, Pauli Sakari
(86) International application number: PCT/FI2007/000085
(87) International publication number: WO 2007/113377

(56) References cited:
- WO-A1-00/45125
- US-A- 5 402 234
- US-A- 5 706 085
- US-A1- 2005 225 769
- US-A1- 2005 266 395
- WOODHAM R J: "PHOTOMETRIC METHOD FOR DETERMINING SURFACE ORIENTATION FROM MULTIPLE IMAGES" OPTICAL ENGINEERING, SOC. OF PHOTO-OPTICAL INSTRUMENTATION ENGINEERS, BELLINGHAM, vol. 19, no. 1, 1 January 1980 (1980-01-01), pages 139-144, XP008079323 ISSN: 0091-3286
- PALUSZYNSKI J ET AL: "Surface reconstruction with the photometric method in SEM" VACUUM, PERGAMON PRESS, GB, vol. 78, no. 2-4, 30 May 2005 (2005-05-30) , pages 533-537, XP004915426 ISSN: 0042-207X
- LAITINEN N. ET AL.: 'Does a powder surface contain all necessary information for particle size distribution analysis?' EUROPEAN JOURNAL OF PHARMACEUTICAL SCIENCES vol. 17, 2002, pages 217 - 227, XP003015796

## Description

The present invention relates to a method for measuring or recognizing a shape.

The measurement of a surface is required in many different applications of technology. Examples of such applications are the measurement of particle size, for example, in various pharmaceutical quality-control applications. On the other hand, measurement of the shape of a surface is also used in various kinds of pattern recognition, from the simple recognition of a shape to the recognition of the face of a person, or as far as the recognition of even more complex patterns.

Some examples of applications of the prior art in the general area of the invention are given in the following publications.

The publications FI 20000493, US 5,239,358, JP 10010033, US 6,122,043, and WO 03062804 disclose the optical measurement of the particle size or surface shape of a powder. In the publication Laitinen, Antikainen, Yliruusi, Does a powder surface contain all necessary information for particle size distribution analysis?, European Journal of Pharmaceutical Sciences, 17(4 - 5), 217 - 227, there is a description of a measuring device, in which two sources of white light are used and the sample is imaged using a single camera. In the said publication, the measuring device described takes two separate black-and-white photographs. The first image is taken with a first lamp illuminating the subject and the second image is taken with a second lamp illuminating the subject. The so-called difference-matrix distribution is calculated from these two images.

An example of a drawback of the method described above is that, as two separate photographs are taken, which are illuminated alternately, particle size cannot be measured from a moving subject.

The following list also refers to publications, which disclose various measurement methods and improvements to them: US 6,556,706, WO 02059545, US 6,028,672, US 6,974,964, and DE 19962779_{.}

The present invention is intended to create a method and apparatus, with the aid of which the measurement and recognition of the shape of a surface can be performed rapidly with great precision, even from a moving subject. This provides enormous opportunities to exploit the invention is very many different areas of technology.

The aforementioned and other benefits and advantages of the present invention are achieved by the present invention, which is defined by the accompanying claims.

In the following, the invention is examined with reference to the accompanying drawings, which some schematic embodiments of the invention.

Thus:
Figure 1 shows a simplified schematic image of one embodiment according to the invention;
Figure 2 shows a second schematic measurement geometry;
Figure 3 shows an image of a surface, obtained using the method and test apparatus according to the invention;
Figure 4 shows the image according to Figure 3, including contours calculated by the method, in the stage of producing the result;
Figure 5 shows a topographic image produced by the system; and
Figure 6 shows another kind of arrangement for exploiting the invention.

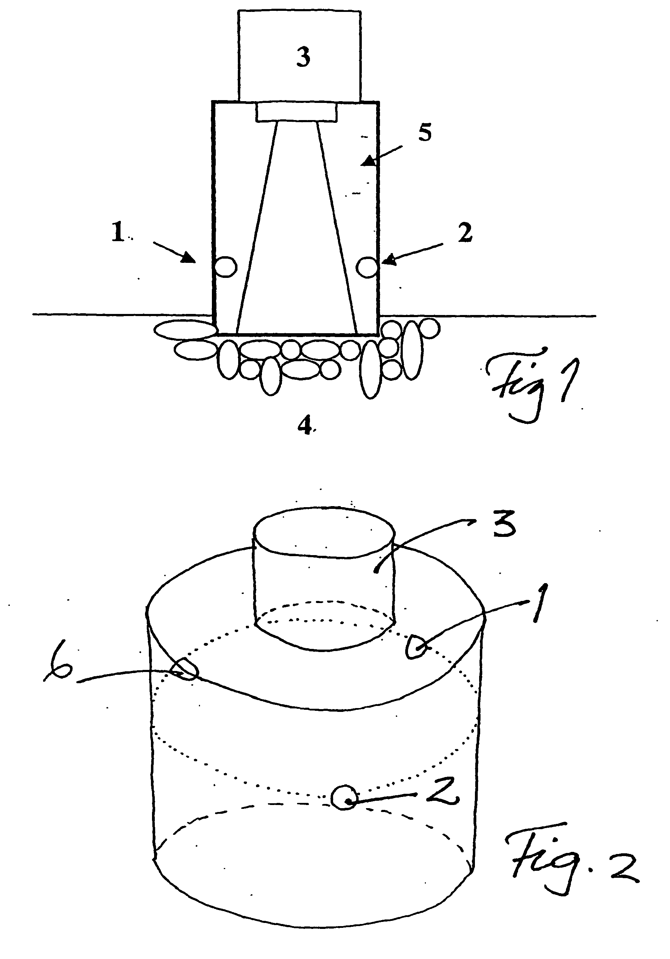

As stated above, Figure 1 shows one example of an arrangement, with the aid of which tests have been performed in order to examine the system. Thus, the surface-shape measuring device, which is the subject of the invention, and which is used in this arrangement, includes two differently coloured light sources, for example, a red 1 and a blue 2 source, as well as a camera 3. The digital camera 3 takes two images, a red and a blue, simultaneously of the subject 4 being examined. The camera images the subject from above and the light sources 1 and 2 are on opposite sides of the sample and aimed at the sample 4 at an angle of about 45°.

As stated, this arrangement has been made only for experimental observations, and does it necessary have anything to do with actual practical applications. Figure 2 shows another example of a measuring arrangement, which illustrates the situation when operating with three differently coloured measuring lights, for example, a red, a blue, and a green light. The precision of the measuring device increases considerably in a system with three lights.

All conventional connection technology has been omitted from the figures. It is, of course, obvious that, for its image processing, the camera is connected to a computer device, in which there is a suitable program for performing the necessary calculation tasks, on the basis of which the desired end result is achieved.

The illuminating power of the red, blue, and green colour of each pixel (image-element) is recorded in a digital image. The relative surface height is calculated from the digital image by a simple subtraction calculation of the strength values of the different part colours of the pixel. The pixels are read consecutively in the direction of the light-source pair.

A three-light system is illustrated in Figure 2, in which the measuring structure is depicted by a cylinder, at the assumed bottom of which is the surface being measured, which in practice can naturally be any surface whatever. A red light source 1, a blue light source 2, and a green light source 6 are located on the wall of the cylinder 5. In this construction, the image can be read in three different directions and the height of the particle can be measured from different sides of the particle. Nothing prevents the lights from also being placed in an asymmetrical configuration relative to the sample, in both the vertical and horizontal directions.

The measurement according to the invention is performed more specifically as follows. Each pixel is read, as stated above, in consecutive order in the direction of each pair formed of two lights. It is assumed that the reading is performed relative to two lights, for example a blue and a green, which light illuminate the subject from two different directions. The reading is performed pixel by pixel over the subject being measured. The intensities of the green and blue lights are measured at the said pixel. If the surface is flat at the point being read, the intensity of both the green and the blue lights will be the same. The difference in the light intensities, which in this case is zero, is calculated.

Next the intensities of the colours of the following pixel are read and a subtraction calculation is performed. Any difference that arises forms a base for the next pixel. Thus the base formed by the difference of the previous pixel is added to the difference in intensity of the colours of the next pixel, i.e. a cumulative addition is performed.

Always performing the comparison in the same direction has the consequence that if the shape of the surface is rising, the cumulative sum increases while a falling surface shape causes a reduction in the cumulative sum. If the difference in intensities is calculated in the other direction, all that changes is that a rising surface shape will cause a negative direction in the cumulative value and a falling surface shape a positive direction.

Performing the reading of the area being examined pixel by pixel results in a very precise image of the shape of the surface.

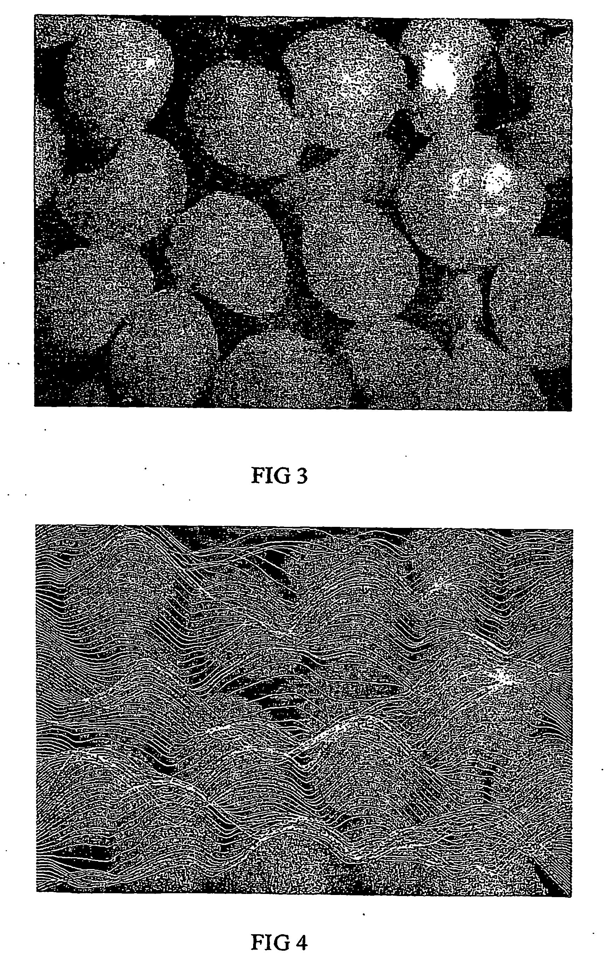

Figure 3 shows a photograph-like presentation of a surface imaged using the arrangement according to the invention. Figure 4 shows the aforementioned surface equipped with lines, which depicted the result when forming the path of the read lines on the surface.

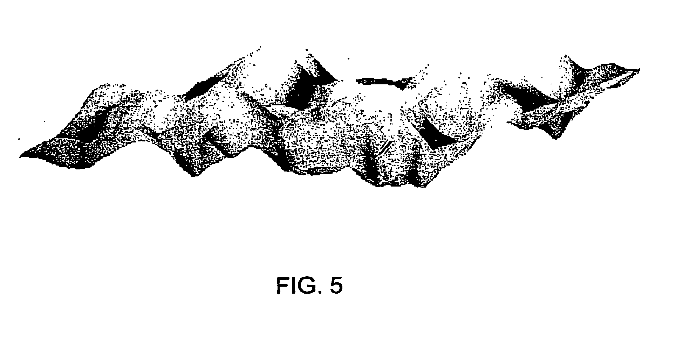

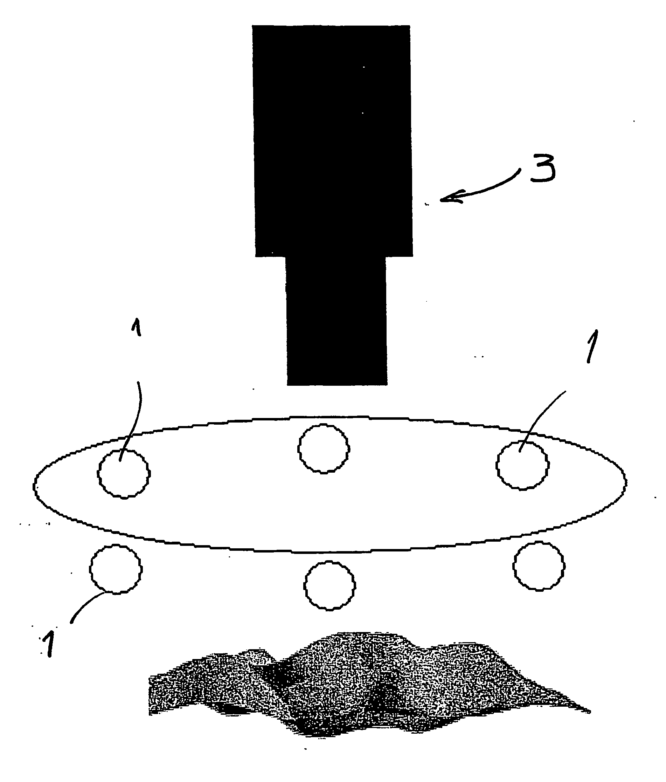

Figure 5 shows, for its part, a topographical image of the end result obtained. These figures, and particularly Figure 5 show the great practical value of the arrangement according to the invention.

The measuring sensor can be attached permanently to the process, or else the measuring sensor can be like an endoscope in the moving subject, which can be, for example, a granular, mixed, crystallized, or suitably static granular mass. In a more highly developed form, the basic idea of the invention can be used for any pattern recognition whatever. This can mean, for instance, face recognition in security checks or other such applications.

Imaging the subject requires only a single exposure is required, which allows a moving subject to be imaged, because all the information coming to the image to be analysed is obtained simultaneously. Naturally, the measurement does not damage the sample.

The scope of application of the invention is very wide. It can be assumed that various measurement tasks in the pharmaceutical industry form quite a large area of application. Measurement is required in raw-material manufacture and quality control, as well as in the final manufacture of the actual pharmaceuticals. The foodstuffs industry, like the pharmaceutical industry, is a large user group. Examples of other industrial sectors with a need to use the method and apparatus according to the invention include the paper industry, the paint industry, while more broadly nearly all parts of the chemical industry require surface or shape recognition.

Considered further, the invention is also suitable for use in the electronics industry, the building industry, or the engineering industry in general. In an even more highly developed form that invention can be applied and used in various security checks, as already referred to above, for example, in frontier surveillance.

The method according to the invention can be used very successfully, for example, for measuring particle size. A drawback of measuring devices presently in use is a poor recognition sensitivity to particles that are in a large mass, as present methods cannot reliably distinguish outlines, on the recognition of which they are based. According to the present invention, three points on the surface of the particle, for example, are defined, from which the size of the particle is calculated by assuming it to be round. Though this assumption is in no way necessarily correct, practical experiments have given very accurate particle-size definitions as a result of it.

The method can be used to rapidly measure and examine the roughness of various surfaces. Roughness is important in several areas. Examples of applications are the surface of paper, painted wooden surfaces, and metal and plastic surfaces that are machined in various ways.

The method can be used to examine the straightness of a surface, how straight some surface is relative to a measurement subject.

Quality inspection too, for instance when painting, galvanizing, etc., forms part of the examinations that can be easily implemented by means of the method according to the invention.

Fingerprint recognition can be easily implemented using the method of the invention.

Pattern recognition can be performed quickly. For example, in access control codes are not required, the door opening one the system reads the 3D coordinates of the face of someone approaching, which are recorded in the system, and which, due to the third dimension, can be considerably simpler and more detailed compared to 2D recognition. In addition, by way of example: a computer can start, a mobile phone can switch on, a car door can open, if an image is taken and the user identified with its aid.

Other examples include the examination of the structure of the skin. For example, in the skin-cream industry an easy method is required for measuring the number/type of wrinkles without irritating the skin.

The inspection of the quality of building materials during construction and the investigation of the durability of materials in long-term tests. The building materials can be, for example, timber, brick, concrete, steel.

The monitoring of the dissolving of a surface. Possible examples are the real-time dissolving of a crystal or a tablet containing a pharmaceutical agent. In such cases what is investigated is how the structure of the surface changes during dissolving.

The real-time monitoring of crystal growth. In crystal growth, it is often wished to see how an individual crystal grows. The method provides a rapid method for monitoring the growth of a crystal, which does not destroy the subject.

Monitoring of surface contamination. In many situations it is necessary to monitor the contamination of surfaces (wall surfaces, floors, research and manufacturing devices).

Microscope applications. A rapid 3D image can be created using a conventional microscope.

Endoscope applications. The method can be used in connection with an endoscope, in which case all the areas of application of an endoscope are involved.

Digital camera. An option according to the method can be easily built into a digital camera.

Mobile telephone / trend games. An option according to the invention can be easily built into the camera of a mobile phone. The phone will recognise the user and switch. Gamers can create, for example, game characters for role games, which have the player's own 3D face.

Monitoring of the quality of a road surface, and the exploitation of the measurement in question, for example, in anti-skid systems.

Monitoring of an airport runway surface during aircraft landing.

Other tuning methods: for example, the use of ultrasound. 3D imaging of foetuses using ultrasound, medical imaging, for example, cancer diagnosis.

Echo-sounding applications is various mediums: by using two ultrasound sources, the method can be used to define 3D structures, as it can by using electromagnetic radiation too. The method can be utilized, for example, in water, as in echo-sounding applications used at sea.

The method according to the invention can also be used to investigate, for example, metal structures or soil.

Above, reference has only be made to lights of a specific colour, which are used according to the invention. This is certainly not the whole truth, as according to the invention it is possible to use two or more sources of any electromagnetic radiation whatever. The essential factor is that the result that arises is a combination of two or more data appearing in a manner that can be distinguished from each other, the difference between which can be read and altered according to the principles presented above.

One example of another kind of arrangement for the application of the invention is shown in Figure 6. In the figure, the camera is marked with the reference number 3 and the light sources, of which there are six in the figure, are marked with the reference number 1. There can be a desired number of light source, which can be of a clearly greater number than six. Below is also an outline of the shape of the recognized surface.

In the case described above, it is possible to proceed in several different ways. By way of example, it is possible to use a blue and green pair of lights, which illuminate the subject from different directions and perform the further operations as described above. It is also possible to illuminate the subject in such a way that, for instance, six different wavelength ranges are filtered from the electromagnetic spectrum (three different illumination pairs). These illumination pairs are placed symmetrically, according to Figure 6. Proceeding in this way - as also when there are suitable filters in the receiving cameras - image information collected by a single imaging will be obtained. By using several light pairs, the image will become very precise.

Electromagnetic oscillation can be led directly to the desired subject, or the aid of mirrors, or prisms, or similar means can be used. The electromagnetic radiation can also be manipulated in many different ways, for example, it is possible to use filters in order to amplify specific wavelengths, or to separate or eliminate them. Such ways are known in many areas of technology.

The method according to the invention is very rapid compared to many systems presently in use. The calculating power required to calculate the result and the three-dimensional image on the basis of the image obtained is very reasonable, for which reason the result is obtained very quickly while the variations of the subjects to be measured/recognized are very diverse, because when using the method according to the invention there is no need for calculation processes lasting minutes, or even tens of minutes.

## Claims

1. Method for measuring a shape of an object from a single image of said object to be measured, using at least two independent and spatially separate sources of electromagnetic radiation having different wavelengths such that each of said radiations is aimed at said object from a different direction, wherein the image matrix of said image consists of a plurarity of digital pixels and each pixel is capable of saparately capturing the respective strength values for each of said wavelengths, and wherein the image matrix is read pixel by pixel in the reading direction, and for each pixel a difference is calculated from two respective strength values of the respective pixel by a simple subtraction calculation of said respective strength values of said radiation of different wavelengths and coming from two different directions, said difference being zero if the object surface is flat at the point corresponding to the respective pixel, and wherein for each pixel said difference of the strength values is added to the corresponding difference of the preceding pixel in said reading direction such as to compute a cumulative sum of differences which increase if the shape of the object surface is rising in the reading direction and which decreases if the shape of the object surface is falling in the reading direction.

2. Method according to claim 1, **characterized in that** the rising, falling, or flat shape of the surface is decided from the difference between the strength values.

3. Method according to claim 1, **characterized in that** at least two wavelengths of visible light are used in the imaging of the subject being defined.

4. Method according to any of the above claims, **characterized in that** a combination of at least two lights from the group, red, blue, and green is used in the imaging of the subject being defined.

5. Method according to any of the above claims, **characterized in that** a digital camera, by means of which red, blue, and green images of the subject are taken simultaneously, is used in the imaging of the subject being defined.

6. Method according to any of the above claims, **characterized in that** separate electromagnetic oscillation illuminating in the direction of the camera is also used in order to take a total image of the subject.

7. Method according to claim 6, **characterized in that** the total image is used as an aid when forming a programmatic 3D image of the subject.

8. Method according to any of the above claims, wherein said object is a particle and said shape is measured, for determining particle size, **characterized in that** at least three pixel locations are determined from the surface of the particle, and the size of the particle is approximated from them.

9. Method according to any of the above claims, **characterized in that** means such as mirrors, prisms, filters, polarizers, and similar means are used in it, in order to affect the electromagnetic radiation.

## Patentansprüche

1. Verfahren zur Vermessung einer Form eines Objekts aus einem einzigen Bild des zu vermessenden Objekts mit Hilfe von zumindest zwei unabhängigen und räumlich getrennten Quellen elektromagnetischer Schwingungsstrahlung mit unterschiedlichen Wellenlängen auf solche Weise, das jede der Strahlungen aus einer anderen Richtung auf das Objekt gerichtet ist, wobei die Bildmatrix des besagten Bildes aus einer Vielzahl von digitalen Pixeln besteht und jedes Pixel imstande ist, die jeweiligen Intensitätswerte für jede der Wellenlängen getrennt zu erfassen, und wobei die Bildmatrix Pixel für Pixel in der Leserichtung gelesen wird, und für jedes Pixel eine Differenz aus zwei Intensitätswerten des jeweiligen Pixels durch einfache Subtraktionsberechnung der jeweiligen Intensitätswerte der Strahlung verschiedener und aus zwei verschiedenen Richtungen kommenden Wellenlängen errechnet wird, welche Differenz null ist, wenn die Oberfläche des Objekts an der dem jeweiligen Pixel entsprechenden Stelle flach ist, und wobei für jedes Pixel besagte Differenz der Intensitätswerte zur entsprechenden Differenz des vorausgehenden Pixels in der Leserichtung addiert wird, um eine kumulative Summe von Differenzen auszurechnen, die zunimmt, falls die Form der Oberfläche des Objekts in der Leserichtung ansteigend ist, und die zurückgeht, wenn die Form der Oberfläche des Objekts in der Leserichtung abfallend ist.

2. Verfahren nach Patentanspruch 1, **dadurch gekennzeichnet, dass** auf die ansteigende, abfallende oder flache Form der Oberfläche aus der Differenz zwischen den Intensitätswerten geschlossen wird.

3. Verfahren nach Patentanspruch 1, **dadurch gekennzeichnet, dass** zumindest zwei Wellenlängen von sichtbarem Licht beim Abbilden des definierten Subjekts benutzt werden.

4. Verfahren nach einem der obigen Patentansprüche, **dadurch gekennzeichnet, dass** eine Kombination von zumindest zwei Lichtern aus der Gruppe rot, blau und grün beim Abbilden des definierten Subjekts benutzt wird.

5. Verfahren nach einem der obigen Patentansprüche, **dadurch gekennzeichnet, dass** eine Digitalkamera, mit der rote, blaue und grüne Bilder des Objekts gleichzeitig aufgenommen werden, beim Abbilden des definierten Subjekts benutzt wird.

6. Verfahren nach einem der obigen Patentansprüche, **dadurch gekennzeichnet, dass** die getrennte elektromagnetische Schwingung, die in Richtung Kamera abstrahlt, auch benutzt wird, um ein Gesamtbild des Subjekts aufzunehmen.

7. Verfahren nach Patentanspruch 6, **dadurch gekennzeichnet, dass** das gesamte Bild zur Hilfe herangezogen wird, wenn ein programmatisches 3D-Bild des Subjekts bildet wird.

8. Verfahren nach einem der obigen Patentansprüche, wobei es sich beim Objekt um ein Partikel handelt, und die Form zur Bestimmung der Partikelgröße vermessen wird, **dadurch gekennzeichnet, dass** zumindest drei Pixelpositionen von der Oberfläche des Partikels bestimmt werden und die Größe des Partikels daraus approximiert wird.

9. Verfahren nach einem der obigen Patentansprüche, **dadurch gekennzeichnet, dass** Mittel, etwa Spiegel, Prismen, Polarisatoren, zur Beeinflussung der elektromagnetischen Strahlung eingesetzt werden.

## Revendications

1. Procédé pour mesurer la forme d'un objet à partir d'une simple image dudit objet à mesurer, en utilisant au moins deux sources indépendantes et spatialement séparées de radiation électromagnétique oscillante ayant des longueurs d'onde différentes de manière à ce que chacune desdites radiations vise ledit objet d'une direction différente, dans lequel procédé la matrice d'image de ladite image se compose d'une pluralité de pixels numériques et chaque pixel est capable de capturer séparément les valeurs de résistance respectives pour chacune desdites longueurs d'onde, et dans lequel procédé la matrice d'image est lue pixel par pixel dans le sens de la lecture, et pour chaque pixel on calcule une différence à partir de deux valeurs de résistance respectives du pixel respectif par simple de calcul de soustraction desdites valeurs de résistance respectives de ladite radiation de différentes longueurs d'onde et venant de deux directions différentes, ladite différence étant zéro, si la surface de l'objet est plate au point correspondant au pixel respectif, et dans lequel procédé pour chaque pixel ladite différence de valeurs de résistance est rajoutée à la différence correspondante du pixel précédent dans ledit sens de lecture de manière à calculer une somme cumulative des différences, qui augmente si la forme de la surface de l'objet monte dans le sens de la lecture, et diminue, si la forme de la surface de l'objet descend dans le sens de la lecture.

2. Procédé selon la revendication 1, **caractérisé en ce que** la forme montante, descendante ou plate de la surface est conclue de la différence entre les valeurs de résistance.

3. Procédé selon la revendication 1, **caractérisé en ce qu'**au moins deux longueurs d'ondes de lumière visible sont utilisées dans la formation de l'image du sujet à définir.

4. Procédé selon l'une quelconque des revendications ci-dessus, **caractérisé en ce que** la combinaison d'au moins deux lumières du groupe rouge, bleu et vert est utilisée pour la formation de l'image du sujet à définir.

5. Procédé selon l'une quelconque des revendications ci-dessus, **caractérisé en ce qu'**un appareil photo numérique, au moyen duquel les images rouge, bleue et verte du sujet sont prises simultanément, est utilisé pour former l'image du sujet à définir.

6. Procédé selon l'une quelconque des revendications ci-dessus, **caractérisé en ce qu'**une oscillation électromagnétique séparée éclairant dans la direction de l'appareil photo est également utilisée afin de saisir une image globale du sujet.

7. Procédé selon la revendication 6, **caractérisé en ce que** l'image globale est utilisée comme aide pour former une image 3D programmatique du sujet.

8. Procédé selon l'une quelconque des revendications ci-dessus, dans lequel procédé ledit objet est une particule et ladite forme est mesurée pour déterminer la taille de la particule, **caractérisé en ce qu'**au moins trois emplacements de pixel sont déterminés à partir de la surface de la particule, et la taille de la particule est approximée à partir de ceux-là.

9. Procédé selon l'une quelconque des revendications ci-dessus, **caractérisé en ce que** des moyens tels que miroirs, prismes, filtres, polarisateurs sont utilisés afin d'agir sur la radiation électromagnétique.
